# EUROPEAN PATENT SPECIFICATION

(11) **EP 4 191 031 B1**
(45) Date of publication and mention of the grant of the patent: **11.09.2024**
(21) Application number: 21954417.8
(22) Date of filing: 30.09.2021
(51) Int. Cl.: F01N 3/08, F01N 3/10, F01N 13/00, F01N 3/28, B01D 53/94, B01J 23/63, B01J 35/00, B01J 37/02

(54) **THREE-WAY CATALYTIC CONVERSION SYSTEM FOR ENGINE EXHAUST PURIFICATION TREATMENT AND APPLICATION THEREOF**
KATALYTISCHES DREIWEG-UMWANDLUNGSSYSTEM ZUR MOTORABGASREINIGUNGSBEHANDLUNG UND ANWENDUNG DAVON
SYSTÈME DE CONVERSION CATALYTIQUE À TROIS VOIES POUR LE TRAITEMENT DE PURIFICATION D'ÉCHAPPEMENT DE MOTEUR ET SON APPLICATION

(43) Date of publication of application: 07.06.2023
(73) Proprietor: Ningbo Geely Royal Engine Components Co., Ltd., Ningbo City, Zhejiang 315336 (CN); Aurobay Technology Co., Ltd., Ningbo, Zhejiang 315899 (CN); Zhejiang Geely Holding Group Co., Ltd., Hangzhou, Zhejiang 310051 (CN)
(72) Inventor: XU, Lifeng, Ningbo Zhejiang 315336 (CN); WANG, Ruiping, Ningbo Zhejiang 315336 (CN); SHEN, Yuan, Ningbo Zhejiang 315336 (CN); WEI, Hong, Ningbo Zhejiang 315336 (CN); ZHANG, Miao, Ningbo Zhejiang 315336 (CN); MA, Jinqiang, Ningbo Zhejiang 315336 (CN); SCHOLTEN, Ingo, Ningbo Zhejiang 315336 (CN)
(74) Representative: Boult Wade Tennant LLP
(86) International application number: PCT/CN2021/122422
(87) International publication number: WO 2023/050409

(56) References cited:
- EP-A1- 3 698 866
- EP-A1- 3 699 408
- EP-A2- 2 592 255
- CN-A- 102 220 897
- CN-A- 102 808 677
- CN-A- 105 240 098
- CN-A- 107 035 482
- CN-A- 108 290 103
- CN-A- 110 118 117
- DE-A1- 102019 133 498
- FR-A1- 3 107 729
- JP-A- 2009 167 806
- US-A1- 2012 247 091
- US-A1- 2019 105 636

## Description

### TECHNICAL FIELD

The present invention relates to the field of engine exhaust gas aftertreatment system, and in particular, to a three-way catalytic conversion system for purification treatment of engine exhaust gas and use thereof.

### BACKGROUND

Exhaust gas from a stoichiometry operating automobile engine contains harmful gases such as HC, CO and NOx, which can usually be eliminated by the three-way catalytic conversion system (TWC system). The existing TWC system is based on a function of three-way catalytic conversion of a three-way catalyst (TWC), which converts HC, CO and NOx in the exhaust gas into carbon dioxide (CO₂), nitrogen (N₂) and water, realizing the elimination of HC, CO and NOx. Basic components of the three-way catalyst mainly are a porous matrix material, an oxygen storage material and a noble metal, where the noble metal mainly includes platinum (Pt), palladium (Pd) and rhodium (Rh), and is an active component of the TWC. Main functions of Pt and Pd are to accelerate the oxidation of hydrocarbon (HC) and carbon monoxide (CO) under a condition of lean exhaust gas (air-fuel ratio λ > 1, the exhaust gas is rich in oxygen), and to catalyze steam reformation of HC and water-gas shift reaction of CO under a condition of rich exhaust gas (λ < 1, the exhaust gas is deficient in oxygen) to eliminate HC and CO. A main function of Rh is to convert nitrogen oxides (NOx) under conditions of stoichiometry (λ = 1) and rich (λ < 1) exhaust gas, and a basic function of the oxygen storage material is to adjust the value of λ in a small range and reduce the degree of deviation from λ = 1, so as to maintain a three-way reaction under stoichiometry conditions. The oxygen storage material usually needs to be combined with a noble metal to exert its function effectively. The porous matrix material usually is a porous alumina (Al₂O₃)-based material with large specific surface area, is mainly used as a loading material to disperse a noble metal and ensure the activity and stability of catalyst and other property. Rh is easy to react with Al₂O₃ at high temperature and thus fail, so usually Rh is loaded on the oxygen storage material in TWC catalyst, and the oxygen storage material is filled on a surface of an alumina-based material to achieve the purpose of separating Rh from Al₂O₃ to avoid failure of the catalyst.

In general, oxygen reacts quickly with reductive components such as HC and CO during the working process of TWC, releasing a large amount of heat to raise the temperature of TWC sharply. Especially when the exhaust gas with high oxygen content (such as the exhaust gas produced by the stoichiometry operating engine with oxygen volume content more than 1%, or even more than 2-3%) is subjected to three-way catalytic conversion, the reaction is more intense, and the TWC will rise to a higher temperature. On one hand, a large number of combustion reactions will occupy most of a TWC space at an engine exhaust gas inlet end of TWC, while only back end of TWC can play the three-way conversion role (that is, most of TWC is used to burn reductive components such as HC and CO and consume oxygen, while only a small part of TWC plays the function of three-way catalytic conversion, converting NOx), and the function of TWC is limited. On the other hand, the high temperature produced by combustion can usually be higher than 950°C, which exceeds the TWC conversion temperature window (usually 350°C-700°C), is not conducive to the three-way conversion reaction and affects the conversion efficiency of harmful gases such as NOx. In addition, the high temperature produced on TWC by combustion makes TWC work at an ultra-high temperature (900-980°C), and working at an ultra-high temperature (e.g. 950°C) for a long time will accelerate the aging of TWC and seriously deteriorate the function of TWC, mainly manifested as follows: (1) pore collapse of porous matrix material and sharp decrease of surface area, affecting an overall structure and performance of TWC, especially burying some of noble metal and reducing the number of catalytic active sites; (2) aging of oxygen storage material weakening the binding with noble metal and regulation function of λ, reducing water-gas shift reaction of CO and a function of steam reformation of HC, and decreasing protection function on Rh at the same time, which makes Rh easy to contact and react with Al₂O₃ and thus failure, which seriously reduces the catalytic reduction capability of the catalyst on NOx; (3) continuous growth of noble metal particles weakens a three-way catalytic activity of TWC.

EP 2592255A2 discloses a method for controlling an internal combustion engine (10) which limits emission of undesirable compounds of nitrogen and oxygen and provides increased transient power, the method comprising: operating the engine at a first power output by providing a first air/fuel mixture to a combustion chamber of the engine; receiving a request for an increased power output from the engine, that is greater than the first power output; providing a second air/fuel mixture to the combustion chamber of the engine, the second air/fuel mixture comprising a greater amount of fuel than the first air/fuel mixture; and treating a flow of exhaust gas with a non-urea aftertreatment to reduce a level of pollutant in the exhaust gas during a fuel enriched operation of the engine to invoke the real-time removal reduction of the pollutant while increasing engine power.

FR 3107729A1 discloses an exhaust pipeline (1) which is capable of conveying and post-processing exhaust gas, and extends from an inlet (2) connected to an internal combustion engine (M) to an outlet (3) leading to open air, and comprises a carbon monoxide conversion catalyst (8) which is capable of neutralizing carbon monoxide at low temperature.

DE 102019133498A1 discloses a method for reactivating an exhaust gas aftertreatment component (14), which is arranged in an exhaust line (22) of an internal combustion engine (12) and has an exhaust gas aftertreatment element (16) containing precious metal, wherein the internal combustion engine (12) is operated with a stoichiometric fuel-air mixture in its operating phase. The method is characterized in that in order to reactivate the exhaust gas aftertreatment component (14), the internal combustion engine (12) is temporarily operated in a regeneration phase, in which the internal combustion engine (12) is operated with a rich fuel-air mixture in the regeneration phase such that the oxidized precious metal compounds of the precious metal-containing exhaust gas aftertreatment element (16) may be at least partially reduced.

EP 3698866A1 discloses an oxidation catalyst composite, methods and systems for the treatment of exhaust gas emissions from an advanced combustion engine, such as the oxidation of unburned hydrocarbons (HC), and carbon monoxide (CO) and the reduction of nitrogen oxides (NOx) from a diesel engine and an advanced combustion diesel engine. More particularly, washcoat compositions are disclosed comprising at least two washcoat layers, a first washcoat comprising a palladium component and a first support containing cerium and a second washcoat containing platinum and one or more molecular sieves.

US 20190105636A1 discloses a three-way conversion (TWC) catalyst composition suitable for at least partial conversion of gaseous hydrocarbons (HC), carbon monoxide (CO), and nitrogen oxides (NOx). Generally, the catalyst composition comprises a platinum group metal component impregnated into a porous refractory oxide support, wherein the porous refractory oxide support has an average pore radius ranging from about 250 Å to about 5,000 Å, a total intrusion volume of at least about 1.8 ml/g, and a porosity of at least about 80%.

EP 3699408A1 discloses an exhaust gas purification system for vehicle including: a housing disposed on an exhaust pipe to receive an exhaust gas discharged from an engine and to exhaust the exhaust gas passed rearward; a front end catalyst disposed in the housing to purify the exhaust gas flowing into the housing through a front end of the housing; a rear end catalyst disposed in the housing to purify the exhaust gas passing through the front end catalyst before the exhaust gas flows out to a rear end of the housing; and a controller connected to the exhaust pipe at a front end of the housing to control a concentration of unburned fuel contained in the exhaust gas flowing into the housing.

### SUMMARY

The present invention is set out in the appended set of claims. The present invention provides a three-way catalytic conversion system for purification treatment of engine exhaust gas and use thereof, so as to at least solve the problems existing in the prior art, such as TWC long-time catalytic combustion of excessive reductive components such as HC and CO results in too high temperature and thus results in serious damage of catalyst performance, limited function exertion and other problems.

In one aspect, the present invention provides a three-way catalytic conversion system for purification treatment of an engine exhaust gas, the three-way catalytic conversion system includes an oxidation segment containing a high-temperature-resistant oxidation catalyst and a three-way conversion segment containing a three-way catalyst, where the oxidation catalyst is used to catalyze an oxidation reaction of reductive components in exhaust gas with oxygen, the oxidation segment is located downstream of an engine, and the three-way conversion segment is located downstream of the oxidation segment.

According to an embodiment of the present invention, the oxidation catalyst includes a first alumina-based material and palladium loaded on the first alumina-based material and satisfies at least one of the following features: pore volume of the first alumina-based material is 0.8cc/g-1.2cc/g; specific surface area of the first alumina-based material is 130-180m²/g; and specific surface area of the first alumina-based material after aging at 1200±100°C for 4±0.5h is not lower than 60m²/g.

According to an embodiment of the present invention, the first alumina-based material includes γ-alumina.

According to an embodiment of the present invention, the first alumina-based material contains a rare earth element, and a mass content of the rare earth element in the first alumina-based material is 0-7%.

According to an embodiment of the present invention, a mass content of palladium in the oxidation catalyst is 0.06-1.0%.

According to an embodiment of the present invention, there are at least two oxidation segments, and a distance between each two adjacent oxidation segments is not less than 150mm.

According to an embodiment of the present invention, the oxidation segment includes a first substrate and a first active layer located on a surface of the first substrate, and the oxidation catalyst is present in the first active layer.

According to an embodiment of the present invention, the first active layer further includes a binder and/or a modifying additive and satisfies at least one of the following features: the binder includes an aluminum gel and/or a silica gel; the modifying additive includes cerium material and/or zirconium material; a mass content of the oxidation catalyst in the first active layer is 85%-98%, and the remaining is the binder and/or the modifying additive.

According to an embodiment of the present invention, a material for forming the first substrate includes at least one of ceramics and metal.

According to an embodiment of the present invention, the oxidation catalyst includes a first alumina-based material and palladium loaded on the first alumina-based material, and a ratio of mass of palladium in the oxidation catalyst to the volume of the first substrate is (3-50) g: 1 ft³.

According to an embodiment of the present invention, a ratio of mass of the first active layer to volume of the first substrate is (100-200) g: 1 L.

According to an embodiment of the present invention, the three-way conversion segment further includes a second substrate and a second active layer located on a surface of the second substrate, and the three-way catalyst is present in the second active layer.

According to an embodiment of the present invention, the second active layer further includes a binder and/or a modifying additive and satisfies at least one of the following features: the binder includes an aluminum gel and/or a silica gel; the modifying additive includes cerium material and/or zirconium material; a mass content of the three-way catalyst in the second active layer is 85%-98%, and the remaining is the binder and/or the modifying additive.

According to an embodiment of the present invention, the three-way catalyst includes a porous matrix material, an oxygen storage material and noble metals, the noble metals including platinum, rhodium and palladium, the oxygen storage material is filled in the porous matrix material, the rhodium is loaded on the oxygen storage material, and the noble metals except for rhodium is loaded on the porous matrix material or on the oxygen storage material.

According to an embodiment of the present invention, the oxygen storage material includes CeZrO.

According to an embodiment of the present invention, the porous matrix material includes a second alumina-based material and satisfies at least one of the following features: pore volume of the second alumina-based material is less than 0.8cc/g; specific surface area of the second alumina-based material is 130-240m²/g; and specific surface area of the second alumina-based material after aging at 1200±100°C for 4±0.5h is not lower than 40m²/g.

According to an embodiment of the present invention, the pore volume of the second alumina-based material is 0.4cc/g-0.8cc/g.

According to an embodiment of the present invention, the second alumina-based material includes γ-alumina and/or θ-alumina.

According to an embodiment of the present invention, the second alumina-based material contains a rare earth element, and a mass content of rare earth element in the second alumina-based material is 3%-7%.

According to an embodiment of the present invention, a material for forming the second substrate includes at least one of ceramics and metal.

According to an embodiment of the present invention, the three-way conversion segment further includes a second substrate and a second active layer located on a surface of the second substrate, and the three-way catalyst is present in the second active layer; a ratio of mass of the noble metal in the three-way catalyst to the volume of the second substrate is (3-50) g: 1 ft³.

According to an embodiment of the present invention, the three-way catalyst further includes platinum, and a mass ratio of rhodium to platinum is 1:0-15; and/or a mass ratio of rhodium to palladium is 1:2-15.

In another aspect, the present invention further provides the use of the above three-way catalytic conversion system in purification treatment of engine exhaust gas.

According to an embodiment of the present invention, the engine exhaust gas includes engine exhaust gas with high oxygen content, and volume content of oxygen in the engine exhaust gas with high oxygen content is not less than 1%.

According to an embodiment of the present invention, the engine exhaust gas includes stoichiometry operating engine exhaust gas.

The three-way catalytic conversion system (TWC system) provided by the present invention is used for purification treatment of engine exhaust gas. The engine exhaust gas is first treated by the oxidation catalyst, so that oxygen and reductive components such as HC and CO are first burned under the catalysis of oxidation catalyst, eliminating oxygen, and reducing the combustion degree in the treatment process of using three-way catalyst, which avoids combustion occupying most of the space of the three-way catalyst and the high temperature produced by combustion to adversely affect the three-way conversion reaction and the structure and performance of the three-way catalyst, thereby ensuring the function exertion of the three-way catalyst and efficiently eliminating harmful components such as HC, CO and NOx in the exhaust gas. The exhaust gas treated by the TWC system of the present invention can reach a target emission standard.

### BRIEF DESCRIPTION OF DRAWINGS

FIG. 1 is a variation curve diagram of oxygen concentration in exhaust gas with engine output power.
FIG. 2 is variation curve diagrams of the temperature of exhaust gas inlet of oxidation segment and the temperature of catalyst in the oxidation segment with engine output power.
FIG. 3 is variation curve diagrams of the conversion rates of NMHC and CO with the aging time of the TWC catalyst in the oxidation segment.
FIG. 4 is variation curve diagrams of conversion rates of NMHC and CO with the aging time of catalyst in the oxidation segment.
FIG. 5 is a variation curve diagram of NOx concentration in engine exhaust gas treated by catalyst system with the reaction temperature of catalyst in oxidation segment.
FIG. 6 is a variation curve diagram of the conversion rate of NOx of catalyst system with the reaction temperature of catalyst in oxidation segment.
FIG. 7 is variation curve diagrams of the temperature of exhaust gas inlet of oxidation segment B, the temperature of oxidation catalyst in the oxidation segment B and temperature of the exhaust gas outlet of the oxidation segment B with engine power, in an example of the present invention.
FIG. 8 is variation curve diagrams of the oxygen concentration at exhaust gas inlet of oxidation segment B and oxygen concentration at exhaust gas outlet of the oxidation segment B with engine power, in an example of the present invention.

### DESCRIPTION OF EMBODIMENTS

The present invention is further described in detail below to enable those skilled in the art to better understand the solution of the present invention.

The TWC system provided by the present invention for purification treatment of engine exhaust gas includes an oxidation segment containing an oxidation catalyst and a three-way conversion segment containing a three-way catalyst, where the oxidation catalyst is used to catalyze an oxidation reaction of reductive components in the exhaust gas with oxygen, the oxidation segment is located downstream of the engine, and the three-way conversion segment is located downstream of the oxidation segment.

In the present invention, the three-way conversion segment (three-way catalyst) is located at the downstream/back end of the oxidation segment (oxidation catalyst), that is, the exhaust gas outlet, the oxidation segment and the three-way conversion segment of the engine are arranged sequentially, and the oxidation segment is located between the exhaust gas outlet of the engine and the three-way conversion segment, so that the exhaust gas from the engine flows through the oxidation segment and the three-way conversion segment in sequence, being treated first by the oxidation catalyst of the oxidation segment and then being treated by the three-way catalyst of the three-way conversion segment, so as to realize the purification of the exhaust gas. Where, the oxidation catalyst is used to catalyze the reaction of oxygen with reductive components such as HC and CO, to consume most of the oxygen and also the reductive components such as HC and CO in the exhaust gas. The exhaust gas treated by the oxidation catalyst is further treated by the three-way catalyst at back end, and the three-way catalyst is used for the three-way conversion (mainly for the simultaneous conversion of HC, CO and NOx). During the treatment of using the three-way catalyst, there is less oxygen and reductive components such as HC and CO left in the exhaust gas, which can reduce the degree of combustion and prevent the three-way catalyst from being covered by combustion, thus ensuring the exertion of three-way catalytic conversion function thereof and avoiding too high temperature, so that the three-way catalyst carries out the three-way conversion reaction at a suitable reaction temperature (350-700°C) and at the same time, it can avoid the adverse effects of high temperature on the structure and performance of the three-way catalyst (such as pore collapse of porous matrix material, decreased activity of noble metal, functional attenuation of oxygen storage material, etc.), thereby improving the efficiency and durability of the three-way conversion reaction.

In concrete implementation, conditions such as distances or relative position between the oxidation catalyst and the three-way catalyst can be adjusted according to the compositions of engine exhaust gas and other factors, so that the three-way catalyst at the back end of the oxidation catalyst may work at 350-700°C (that is, the temperature of the three-way catalyst treatment process is controlled to be about 350-700°C), while avoiding the three-way catalyst from being exposed to ultra-high temperature (850-950°C) for a long time.

Besides, the exhaust gas is first treated by the oxidation catalyst, during which the reductive components such as HC and CO in the exhaust are catalyzed by the oxidation catalyst to react with oxygen. The source of the oxygen can be the oxygen contained in the exhaust gas produced by the engine (that is, the oxygen carried in the exhaust gas produced by the engine). Alternatively, oxygen can be introduced into the inlet of the oxidation catalyst as needed (secondary air injection in the combustion of excess reductants in exhaust gas to accelerate the heating of the catalyst in the cold start-up stage (when engine is designed to run rich)) to consume most of the reductive components such as HC and CO in the exhaust gas, avoid combustion and high temperature during the treatment of the three-way catalyst, so that the three-way catalyst carries out three-way conversion reaction at a suitable reaction temperature (350-700°C). Therefore, in some embodiments, it may further include an intake tube connecting with the exhaust gas inlet of the oxidation segment (when engine is designed to run rich). The intake tube is used to input air (oxygen) into the exhaust gas entering the oxidation segment, so that the exhaust gas entering the oxidation segment consumes most of the reductive components such as HC, CO after being treated by the oxidation catalyst; the intake tube is further provided with a valve, which can stop the input of air when it is not necessary to input oxygen into the exhaust gas entering the oxidation segment, and can input air when it is necessary to input oxygen into the exhaust gas entering the oxidation segment, where air (oxygen) can be input into the exhaust gas entering the oxidation segment through the intake tube (when engine is designed to run rich).

During the oxidation reaction, the temperature of oxidation catalyst is relatively high, but generally not more than 1000°C (the highest temperature to which the catalyst is exposed can be controlled by the combination of oxidation catalysts). The above oxidation catalyst can be an oxidation catalyst tolerant to high temperature, specifically can be an oxidation catalyst resistant to ultra-high temperature of 1000°C-1100°C, that is, the structure and performance of the oxidation catalyst are basically stable at about 1000°C-1100°C, for example, pore collapse phenomenon will basically not occur. Specifically, the oxidation catalyst may include a first alumina-based material and a palladium loaded on the first alumina-based material, where the first alumina-based material has a pore volume of 0.8cc/g-1.2cc/g (i.e., cm³/g), such as 0.8cc/g, 0.9cc/g, 1cc/g, 1.1cc/g, 1.2cc/g or a range composed of any two of them, and a specific surface area of 130-180m²/g, for example, 130m²/g, 140m²/g, 150m²/g, 160m²/g, 170m²/g, 180m²/g or a range composed of any two of them, and after aging at 1200±100°C for 4±0.5h, the specific surface area of the first alumina-based material is not lower than 60m²/g. The use of the first alumina-based material can improve, for example, the high temperature resistance and stability of the oxidation catalyst, and further ensure its catalytic activity and service life.

Specifically, the first alumina-based material may include γ-alumina, which may be doped alumina and/or undoped alumina. In some embodiments, the first alumina-based material contains a rare earth element, and based on the oxide of the rare earth element, a mass content of the rare earth element in the first alumina-based material is 0-7% (that is, the mass of the oxide of the rare earth element accounts for 0-7% of the first alumina-based material), for example, 0, 1%, 2%, 3%, 4%, 5%, 6%, 7%. When the mass content of the rare earth element is 0, the first alumina-based material is undoped alumina, and when the mass content of the rare earth element is not 0, the first alumina-based material is doped alumina (or called as rare earth alumina). Relatively speaking, use of the doped alumina is beneficial to further improve the high temperature tolerance of the alumina-based material. Optionally, the rare earth element includes, for example, lanthanum (La).

The first alumina-based material can be purchased or homemade. In general, when high temperature aging treatment on the alumina raw material may make the pores which are easy to collapse, collapse and thus a stable alumina-based material tolerant to high temperature can be obtained, so that the alumina-based material basically no longer have serious collapse phenomenon when applied at a high temperature condition, thereby improving the high temperature tolerance of the oxidation catalyst that uses the high temperature resistant alumina-based material as the matrix material. Specifically, in some embodiments, the first alumina-based material can be prepared according to a process including the following steps: treating the alumina raw material by aging at 1000°C-1500°C for at least 2 hours to obtain the first alumina-based material. The first alumina-based material prepared by the aging treatment has a good stability below 1000°C, thereby ensuring the high temperature resistance of the oxidation catalyst. When preparing the first alumina-based material without rare earth element, the above alumina raw material is a alumina raw material without rare earth element, and when preparing the first alumina-based material doped with a rare earth element, the above alumina raw material is an alumina raw material doped with the rare earth element, and the alumina raw material used in the above process can be purchased or homemade, without particular restriction in the present invention.

After the alumina-based material is treated by aging at 1000°C-1500°C, the oxidation catalyst can be obtained by loading palladium on the first alumina-based material via conventional methods in the art, such as impregnation (such as equal volume impregnation). In a specific implementation, a precursor of palladium may be dissolved in a first solvent to form a first impregnation solution; the first alumina-based material can be impregnated with the first impregnation solution, for example, the first alumina-based material may be immersed in the first impregnation solution, or the first impregnation solution may be sprayed on the first alumina-based material to perform impregnation, and after impregnation drying and calcining is performed, to remove the solvent, that is, achieving loading of palladium on the first alumina-based material to obtain the oxidation catalyst; where the first solvent may include water, and the precursor of palladium may include soluble salts of palladium, such as palladium nitrate. In addition, an element with the function of anchoring a noble metal, such as barium (Ba), may be added to the oxidation catalyst (or the first coating layer below) to increase the stability of the noble metal.

The oxidation segment may further include a first substrate for carrying the oxidation catalyst, that is, the oxidation catalyst is arranged on the first substrate, and in some preferred embodiments, the oxidation segment includes the first substrate and the first active layer located on a surface of the first substrate, and the oxidation catalyst is present in the first active layer (i.e., the first active layer contains the above oxidation catalyst).

In general, the first active layer further includes the binder and/or modifying additive, where the binder may include an aluminum gel and/or a silica gel, and the modifying additive may include cerium and/or zirconium materials to further improve performances such as stability of the oxidation segment. In some embodiments, based on the total mass of the first active layer, the mass percentage of the oxidation catalyst is 85%-98% (i.e., the mass content of the oxidation catalyst in the first active layer is 85%-98%), for example, 85%, 88%, 90%, 93%, 95%, 98% or a range composed of any two of them, and the remaining is the binder and/or the modifying additive.

In a specific implementation, the oxidation catalyst, binder and/or modifying additive can be mixed with a fourth solvent to prepare a slurry, and then the slurry is coated on a surface of the first substrate, and the first active material layer is formed on the surface of the first substrate after drying and other treatment.

Optionally, the material of the first substrate may include at least one of such as ceramics (such as cordierite, etc.) and metal, that is, the first substrate may be one of ceramic materials, metals, etc. or a mixture of more thereof, the first substrate may be a gasoline particle filter (GPF), may be a honeycomb substrate, but is not limited thereto.

According to the study of the present invention, the content of palladium as an active metal component of a catalytic oxidation active material (i.e., oxidation catalyst) is an important factor affecting the performance of the oxidation catalyst. In some preferred embodiments, based on the total mass of the oxidation catalyst, the mass percentage of palladium is 0.06-1.0% (i.e., the mass content of palladium in the oxidation catalyst is 0.06-1.0%).

In the present invention, the number of the oxidation segment containing the oxidation catalyst is at least one, that is, the number of it may be one or at least two (that is, a combination of two or more oxidation catalysts). When the number of the oxidation segment is at least two, a distance between two adjacent oxidation segments is generally not less than 150mm (the distance is a distance along the flow direction of the engine exhaust gas). In two adjacent oxidation segments, the content of palladium in the oxidation catalyst located in the upstream oxidation segment may be lower than or equal to or higher than the content of palladium in the oxidation catalyst located in the downstream of the oxidation segment, and can be set according to the needs in a specific implementation. Through the combination of at least two oxidation segments, the reductants in the exhaust gas can be partially oxidized (consuming part of oxygen) in each oxidation segment without raising a very high temperature, that is, the heat generated by combustion is dispersed to two oxidation catalysts with a certain distance between them, which can control the maximum temperatures to which the oxidation catalysts in the oxidation segments are exposed, so as to further improve the efficiency and durability of purification treatment of engine exhaust gas.

In addition, it can further be satisfied that: a ratio of the mass of palladium in the oxidation catalyst to the volume of the first substrate is (3-50) g : 1 ft³, (i.e., (3-50) g/ft³), such as 3 g : 1 ft³, 5 g : 1 ft³, 10 g : 1 ft³, 20 g : 1 ft³, 30 g : 1 ft³, 40 g : 1 ft³, 50 g : 1 ft³ or a range composed of any two of them, which is beneficial to improve the treatment efficiency of the above oxidation catalyst.

Further, a ratio of the mass of the first active layer to the volume of the first substrate may be (100-200) g : 1 L (i.e., (100-200) g/L), such as 100 g : 1 L, 150 g : 1 L, 160 g :1 L, 170 g : 1 L, 180 g : 1 L, 190 g : 1 L, 200 g : 1 L or a range composed of any two of them.

The present invention can adopt a conventional three-way catalyst (TWC) in the art. In some embodiments, the three-way catalyst includes a porous matrix material, an oxygen storage material and a noble metal, where the noble metal includes palladium and rhodium, the oxygen storage material is filled in the porous matrix material, rhodium is loaded on the oxygen storage material, and the noble metal except rhodium may be loaded on the porous matrix material or on the oxygen storage material according to the need, and palladium may be loaded on the porous matrix material or on the oxygen storage material. Where since rhodium is loaded on the oxygen storage material, rhodium may also be protected, reducing its contact reaction with other component such as the porous matrix material. Preferably, palladium is loaded on the oxygen storage material, and more preferably, the above noble metals are loaded on the oxygen storage material.

The present invention may load the above noble metal on the oxygen storage material or the porous matrix material by a conventional method in the art, for example impregnation method (such as equal volume impregnation method). For example, the precursor of rhodium may be mixed with a second solvent to prepare a second impregnation solution, and then the second impregnation solution is used to impregnate the oxygen storage material, so as to load rhodium on the oxygen storage material. The second solvent may include water, the precursor of rhodium may be a soluble salt of rhodium, such as rhodium nitrate; a precursor of platinum may be mixed with a third solvent to prepare a third impregnation solution, and then the third impregnation solution is used to impregnate the porous matrix material, so that the platinum may be loaded on the porous matrix material. The third solvent may include water, and the precursor of platinum may be a soluble salt of platinum, such as platinum nitrate.

The oxygen storage material may adjust an air-fuel ratio (λ) of the engine exhaust gas on the surface of the catalyst, so that the three-way conversion reaction may be carried out under the condition of closing to stoichiometry, so as to ensure the efficiency of the three-way conversion reaction and ensure the function exertion of each component. In some embodiments, the oxygen storage material may include CeZrO and may also include ZrO₂, that is, it may include a combination of CeO₂ and ZrO₂, but the present invention is not limited thereto. The porous matrix material is used to disperse components such as noble metal, thereby ensuring the dispersion and catalytic activity of the three-way catalyst. In some embodiments, the porous matrix material may include a second alumina-based material, the second alumina-based material has a pore volume of less than 0.8cc/g and generally preferably 0.4cc/g-0.8cc/g, for example, 0.4cc/g, 0.5cc/g, 0.6cc/g, 0.7cc/g, 0.8cc/g, or a range composed of any two of them, and has a specific surface area of 130m²/g-240m²/g, such as 130m²/g, 140m²/g, 150m²/g, 160m²/g, 170m²/g, 180m²/g, 190m²/g, 200m²/g, 210m²/g, 220m²/g, 230m²/g, 240m²/g or a range composed of any two of them. This is beneficial to the dispersion of the noble metal and other components in porous matrix material and improvement of the performance of the three-way catalyst. In addition, the specific surface area of the second alumina-based material is generally not lower than 40m²/g after aging at 1200 ±100°C for 4 ±0.5h.

Specifically, the second alumina-based material may include γ-alumina and/or θ-alumina, which may be doped alumina and/or undoped alumina, and the doped alumina may generally be doped with a rare earth element. In some embodiments, the second alumina-based material contains a rare earth element, and based on an oxide of the rare earth element, the mass content of the rare earth element in the second alumina-based material may be 3%-7% (that is, the mass of the oxide of the rare earth element accounts for 3%-7% of the second alumina-based material), for example, 3%, 4%, 5%, 6%, 7% or a range composed of any two of them. Optionally, the rare earth element includes, for example, La. The second alumina-based material may be purchased or homemade, and the present invention does not have particular limitations on this.

The three-way conversion segment may further include a second substrate for carrying the three-way catalyst, that is, the three-way catalyst is arranged on the second substrate, and the three-way catalyst may form coating layers on the second substrate, but is not limited thereto. In some preferred embodiments, the three-way conversion segment includes the second substrate and the second active layer located on a surface of the second substrate, and the three-way catalyst is present in the second active layer (i.e., the second active layer contains the three-way catalyst).

In general, the second active layer further contain the binder and/or the modifying additive, where the binder may include an aluminum gel and/or a silica gel, and the modifying additive may include cerium and/or zirconium materials to further improve the performance, such as stability, of the three-way conversion segment. In some embodiments, based on the total mass of the second active layer, the mass percentage of the three-way catalyst is 85%-98% (that is, the mass content of the three-way catalyst in the second active layer is 85%-98%), for example, 85%, 88%, 90%, 93%, 95%, 98% or a range composed of any two of them, and the remaining is the binder and/or the modifying additive.

In a specific implementation, the three-way catalyst, the binder and/or the modifying additive may be mixed with a fifth solvent to prepare a slurry, and then the slurry is coated on the surface of the second substrate, and the second active material layer is formed on the surface of the second substrate after drying and other treatment.

Optionally, the material for forming the second substrate may include at least one of ceramics (such as cordierite), metal, etc., the second substrate may be a gasoline particle filter (GPF), or may be a honeycomb substrate, but not limited thereto, and the second substrate and the first substrate may be the same or different.

In some embodiments, the above noble metal includes platinum, where the mass ratio of rhodium to platinum is 1:0-15, preferably 1:0.5-8, such as 1:0.5, 1:1, 1:2, 1:3, 1:4, 1:5, 1:6, 1:7, 1:8 or a range composed of any two of them, and the mass ratio of rhodium to palladium may be 1:2-15, for example, 1:2, 1:3, 1:4, 1:5, 1:6, 1:7, 1:8, 1:9, 1:10, 1:11, 1:12, 1:13, 1:14, 1:15 or a range composed of any two of them. Where platinum may be loaded on the porous matrix material or the oxygen storage material.

In some embodiments, the ratio of the mass of the noble metal in the three-way catalyst to the volume of the second substrate is (5-50) g : 1 ft³, such as 5 g : 1 ft³, 10 g : 1 ft³, 20 g : 1 ft³, 30 g :1 ft³, 40 g:1 ft³, 50 g:1 ft³, or a range composed of any two of them. Where the mass of the noble metal is the sum of the masses of all kinds of noble metals in the three-way catalyst, for example, the noble metals in the three-way catalyst are rhodium, platinum and palladium, then the mass of the noble metal refers to the sum of the masses of rhodium, platinum and palladium in the three-way catalyst.

The present invention further provides use of the TWC system in purification treatment of engine exhaust gas. The engine of the present invention may specifically be an internal combustion engine, and its exhaust gas generally contains hydrocarbons (HC), carbon monoxide (CO), nitrogen oxides (NOx) and other components. In the process of application, the exhaust gas produced by the engine is discharged from the exhaust gas outlet of the engine, then enters the oxidation segment through the exhaust gas inlet of the oxidation segment, and contacts with the oxidation catalyst in the oxidation segment; under the action of the oxidation catalyst, the reductive components such as HC and CO in the exhaust gas react with oxygen, and then is discharged from the exhaust gas outlet of the oxidation segment, and then enters the three-way conversion segment from the exhaust gas inlet of the three-way conversion segment. In the three-way conversion section, it is in contact with the three-way catalyst to conduct a three-way conversion, so that the HC, CO and NOx in the exhaust gas are converted into carbon dioxide (CO₂), nitrogen (N₂) and water, that is, the purified exhaust gas is obtained. The purified exhaust gas is discharged from the exhaust gas outlet of the three-way conversion segment.

The TWC system of the present invention may be particularly used for the treatment of engine exhaust gas with high oxygen content. In some embodiments, the engine exhaust gas includes an engine exhaust gas with high oxygen content, and the volume content of oxygen in the engine exhaust gas with high oxygen content is not less than 1%, for example, not less than 2%, 2.5%, 3%, 3.5%, etc.

The exhaust gas from the stoichiometry operating engine with high oxygen content has oxidation components such as oxygen (O₂), NOx and reductive components such as HC and CO, and the reductive components have basically the equivalent content as O₂ (both have high contents). In a conventional TWC system, the reaction of a large amount of O₂ with reductive components such as HC and CO on TWC will release a large amount of heat and produce a high temperature, affecting the three-way catalytic conversion efficiency and aging durability of TWC. As a result, the harmful components in the engine exhaust gas cannot be sufficiently converted to meet the emission standards, while the three-way catalytic conversion system of the present invention can effectively solve such problems. In some embodiments, the engine exhaust gas includes the stoichiometry operating engine exhaust gas, in particular, the stoichiometry operating engine exhaust gas with high oxygen content greater than 1% by volume (including much greater than 1%).

Specifically, the stoichiometry operating engine exhaust gas with high oxygen content has a high content of oxygen (O₂), and meanwhile the amount of the reductive components such as HC and CO are basically the equivalent to O₂, and are easier to burn and produce high temperature (even higher than 850°C) in the process of conventional TWC treatment. Running at high temperature (> 850°C) for a long time will cause damage to the structure of TWC and affect the function exertion of TWC. In particular, the catalytic system of the present invention may solve the problem of ultra-high temperature of the catalyst caused by the stoichiometry operating exhaust gas with high oxygen content, and may be used in the aftertreatment system of engine exhaust gas exceeding the high temperature durability limitation of TWC.

In order to make the purpose, technical solution and advantages of the present invention clearer, the technical solution of the present invention will be described clearly and completely in combination with specific examples below. Obviously, the described examples are part of the examples of the present invention, not all examples. Based on the examples of the present invention, all other examples obtained by those skilled in the art without creative work fall within the scope of the protection of the present invention.

### Example 1

In this example, the three-way catalytic conversion system includes an oxidation segment containing an oxidation catalyst and a three-way conversion segment containing a three-way catalyst, where the oxidation catalyst is used to catalyze the oxidation reaction of reductive components such as HC and CO in exhaust gas with oxygen, the oxidation segment is located downstream of the engine, and the three-way conversion segment is located downstream of the oxidation segment; where:
the oxidation segment consists of the first substrate and the first active layer located on a surface of the first substrate, where the first active layer contains an oxidation catalyst and a binder, a mass content of the oxidation catalyst in the first active layer is 90-98% and the remaining is the binder, which is aluminum gel and silica gel, and the first substrate is cordierite; a ratio of the mass of the first active layer to the volume of the first substrate is 160 g: 1 L;
the oxidation catalyst includes a first alumina-based material and palladium loaded on the first alumina-based material, the oxidation catalyst is prepared by impregnating palladium nitrate onto the first alumina-based material by an equal volume impregnation method, where the first alumina-based material is a rare earth alumina resistant to high temperature from Bai zhe Xing Energy Co., Ltd. (where the alumina is γ-alumina), the rare earth alumina has a pore volume (Pore Volume) of about 0.94cc/g and a specific surface area (Surface Area) of about 169.4m²/g, and the specific surface area thereof is about 61.23m²/g after aging at 1200°C for 4h; the rare earth element contained in the first alumina-based material is La, and the mass content of La in the first alumina-based material is about 4%, based on an oxide (La₂O₃) of La;
the mass content of palladium in the oxidation catalyst is about 0.22% (about 0.353g palladium per liter of the oxidation catalyst), and in the oxidation segment, a ratio of the mass of palladium in the oxidation catalyst to the volume of the first substrate is 10g : 1ft³;
the three-way catalyst consists of the second substrate and the second active layer located on the surface of the second substrate, where the second active layer contains a three-way catalyst and a binder, a mass content of the three-way catalyst in the second active layer is 90-98% and the remaining is the binder, which is aluminum gel and silica gel, and the second substrate is cordierite;
the three-way catalyst consists of the second alumina-based material, CeZrO and a noble metal, the noble metal consists of rhodium and palladium, rhodium and palladium are loaded on CeZrO, which is filled in the second alumina-based material; the second alumina-based material is a rare earth alumina from Bai zhe Xing Energy Co., Ltd. (where alumina is γ-alumina), the rare earth alumina has a pore volume (Pore Volume) of about 0.49cc/g, and a specific surface area (Surface Area) of about 145m²/g, and the specific surface area thereof is about 110m²/g after aging at 1000°C for 4h; the rare earth element in the second alumina-based material is La, and a mass content of La₂O₃ in the second alumina-based material is about 4%, based on an oxide (La₂O₃) of La;
in the three-way conversion segment, a ratio of the mass of the noble metal in the three-way catalyst to the volume of the second substrate is 10 g: 1 ft³, where a mass ratio of rhodium to palladium is 3:7.

### Application Example

The performance of the above catalytic system is verified by the engine bench experiment below. During the experiment, the exhaust gas from the engine flows through an oxidation segment and a three-way conversion segment in sequence, with the process being briefly described as follows: the exhaust gas produced by the engine is discharged from the exhaust gas outlet of the engine, then enters the oxidation segment through the exhaust gas inlet of the oxidation segment, and contacts with an oxidation catalyst in the oxidation segment, so that the oxygen of the exhaust gas conducts a redox reaction with the reductive components, and then the exhaust gas is discharged from the outlet of the oxidation segment, then enters the three-way conversion segment from the inlet of the three-way conversion segment, and contacts the three-way catalyst in the three-way conversion segment to perform a three-way conversion, and then is discharged from an exhaust gas outlet of the three-way conversion segment, to obtain a purified exhaust gas. According to the above process, the following experiments are carried out as follows: Experiment 1 to Experiment 3, Comparative Experiment 1 and Comparative Experiment 2.

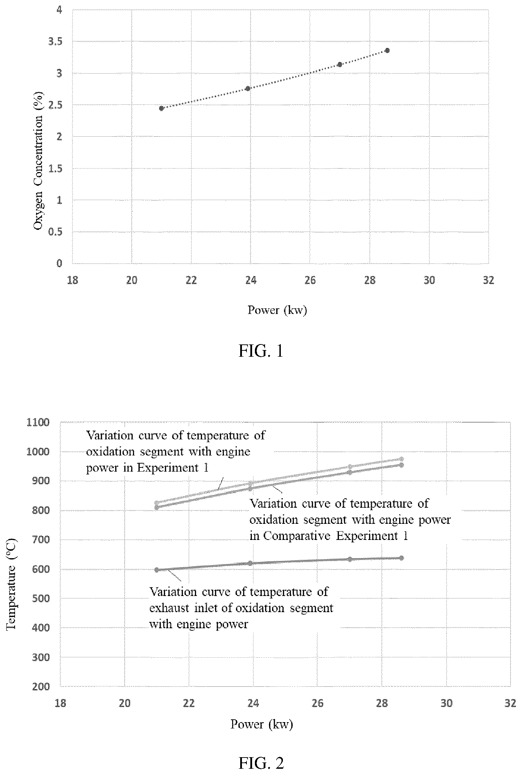

In the following experiments, the conversion rate of NMHC = ((amount of NMHC in simulated exhaust gas - amount of NMHC in exhaust gas discharged from exhaust gas outlet of oxidation segment after reaction in oxidation segment) / amount of NMHC in simulated exhaust gas) × 100%; conversion rate of CO = ((amount of CO in simulated exhaust gas - amount of CO in exhaust gas discharged from exhaust gas outlet of oxidation segment after reaction in oxidation segment) / amount of CO in simulated exhaust gas) × 100%;
stoichiometry operating engine exhaust gas with high oxygen content is simulated (simulating exhaust gas), a variation curve of oxygen concentration (volume content) in the exhaust gas with engine output power is shown in FIG. 1, the contents of NMHC and CO are basically equivalent to oxygen; a variation curve of temperature of an exhaust gas inlet of the oxidation segment with engine output power, and a variation curve of the temperature in the oxidation segment with engine output power are shown in FIG. 2 (the temperature of the oxidation segment is 800°C or higher (between 800°C and 950°C), beyond a conversion temperature window of TWC (350°C-700°C). Where FIG. 2 shows variation curves of the temperatures in the oxidation segments of Experiment 1 and Comparative Experiment 1 with the engine output power, and in the following other experiments, unless otherwise specified, the reaction temperature in the oxidation segment is similar to this.

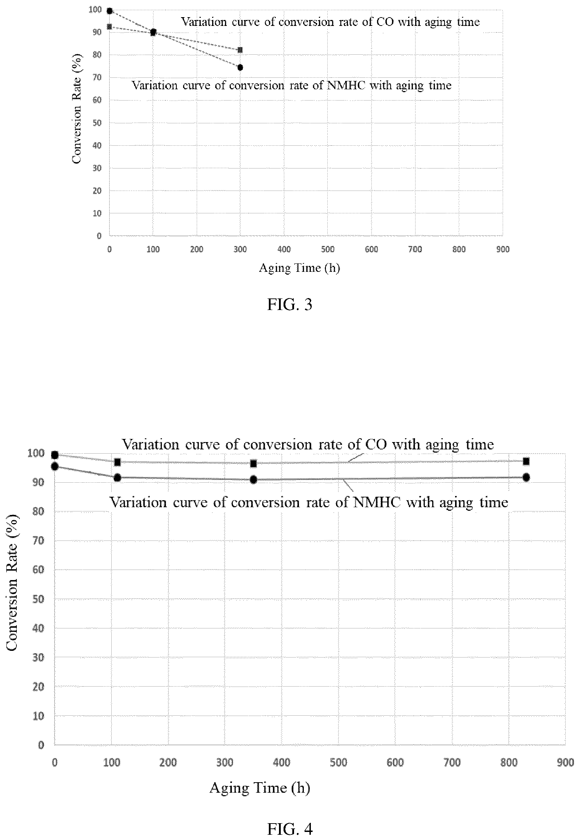

Comparative Experiment 1: the oxidation catalyst in the oxidation segment is a conventional TWC (which differs from the three-way catalyst in Example 1 in that a ratio of the mass of the noble metal to the volume of the second substrate is 40 g: 1 ft³, where the mass ratio of palladium to rhodium is 7:1), the reaction time (or aging time) of the TWC catalyst of the oxidation segment is controlled, as shown in FIG. 3. A variation curve of the conversion rates of NMHC and CO in this oxidation segment (measuring the change of gas concentration before and after the catalyst at 850°C) with aging time in the oxidation segment (at 950°C engine bench) (see FIG. 3) was measured. The conversion efficiency is decreased with the increase of aging time, and decreased significantly after 300 hours aging;

Experiment 1: the oxidation catalyst in Example 1 was aged at 1050°C, and the aged catalyst was used as the oxidation catalyst in the oxidation segment; referring to the process of Experiment 1, the effect of the oxidation catalyst on the conversion of NMHC and CO after the oxidation catalyst is aged at 1050°C for different time (from 110 to 830 hours) was measured, to obtain variation curve of the conversion rate of NMHC and CO (the change of gas concentration before and after oxidation catalyst was measured at 850°C) with aging time (see FIG. 4). It can be seen that the conversion of NMHC and CO is high and tends to be stable with aging time, and the above oxidation catalyst has good aging tolerance;

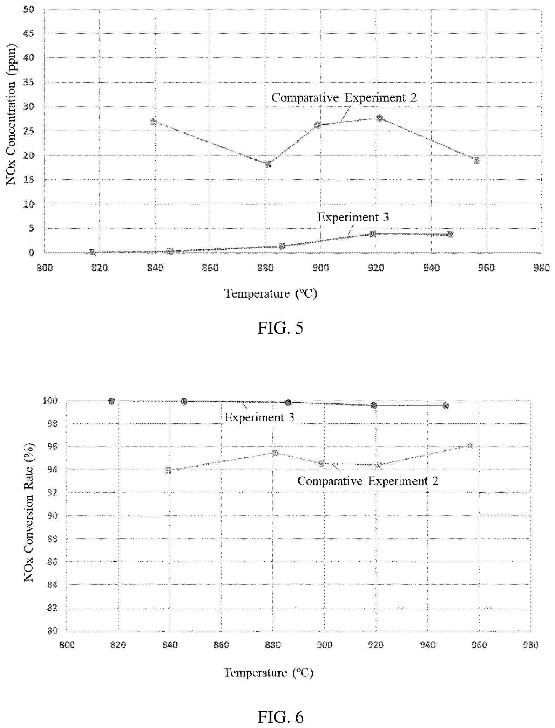

Experiment 2: the oxidation catalyst in Example 1 was aged at 1050°C for 830hours, and then the aged catalyst was used as the oxidation catalyst in the oxidation segment; the reaction temperature of the oxidation catalyst in the oxidation segment was controlled as shown in FIGS. 5 and 6, variation curves of the concentration of NOx and the conversion rate of NOx (ratio of the amount of NOx in the purified exhaust gas to the amount of NOx in the simulated exhaust gas before entering the oxidation segment) with reaction temperature are measured in purification of the exhaust gas by the catalyst system (the catalyst in the oxidation segment + the catalyst in the three-way conversion segment), as shown in FIGS. 5 and 6, respectively. The oxidation catalyst is stable after aging at 1050°C for 830 hours. The concentration of NOx in the exhaust gas purified by the catalyst system (the catalyst in the oxidation segment + the catalyst in the three-way conversion segment) is less than 5ppm, which meets the requirement of emission standards;

Comparative Experiment 2: the TWC of Comparative Experiment 1 was aged at 950°C for 300 hours, and the aged TWC was used as the catalyst for the oxidation segment, and the reaction temperature of the oxidation segment was controlled as shown in FIGS. 5 and 6, variation curves of the concentration of NOx and the conversion rate of NOx (ratio of the variation amount of NOx in the exhaust gas before and after treatment by the catalyst system to the amount of NOx in the simulated exhaust gas before entering the oxidation segment) with the reaction temperature were measured in purification of the exhaust gas by the system (the catalyst in the oxidation segment + the catalyst in the three-way conversion segment), as shown in FIGS. 5 and 6 respectively. The performance of TWC in Comparative Experiment 1 is decreased obviously after aging at 950°C for 300 hours, and after purification by the catalyst system (catalyst in the oxidation segment + catalyst in the three-way conversion segment), the concentration of NOx is > 15ppm, which is higher than the emission requirements (< 5ppm).

### Experiment 3

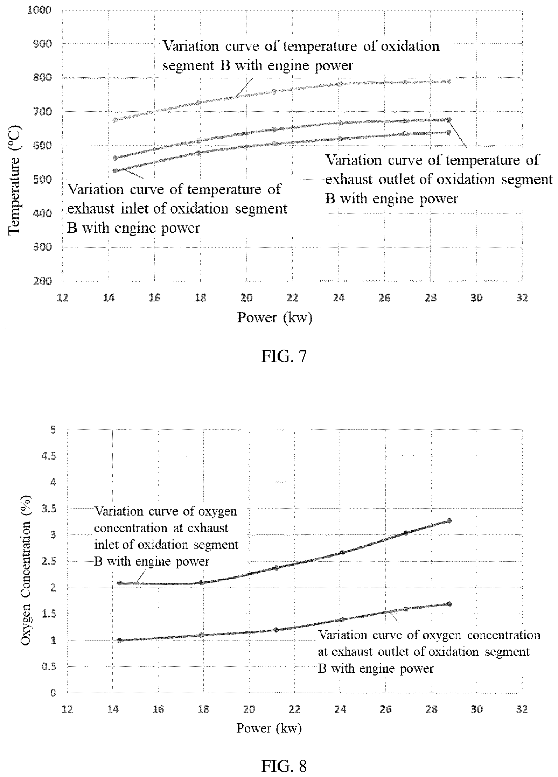

The difference from Experiment 1 and Experiment 2 is that there are two oxidation segments in Experiment 3, which are oxidation segment A and oxidation segment B, respectively. The oxidation segment B is located upstream of the oxidation segment A (that is, the engine exhaust gas is first treated by the oxidation catalyst in the oxidation segment B and then treated by the oxidation catalyst in the oxidation segment A). The oxidation segment A is the same as the oxidation segment in Experiment 1 or Experiment 2 above (that is, it is equivalent that an oxidation segment B is added upstream of the oxidation segment of Experiment 1 or Experiment 2). The ratio of the mass of palladium in the oxidation catalyst of oxidation segment B to the volume of the first substrate is 3 g: 1 ft³, and the other conditions are the same as those of the oxidation segment A;
this experiment is conducted according to the process of Experiment 2, the variation curves of the temperature of the exhaust gas inlet of the oxidation segment B, the temperature of the oxidation catalyst in the oxidation segment B and the temperature of the exhaust gas outlet of the oxidation segment B with engine power are shown in FIG. 7. The variation curves of oxygen concentration at the exhaust gas inlet of the oxidation segment B and oxygen concentration at the exhaust gas outlet of the oxidation segment B with engine power are shown in FIG. 8. The oxidation catalyst of the oxidation segment B partially oxidizes the reductant in the exhaust gas and consumes part of the oxygen in the exhaust gas, so that the redox reaction of the exhaust gas on the oxidation catalyst of the oxidation segment A located downstream is effectively reduced, and the increase of the temperature of the catalyst due to heat produced by the redox reaction is reduced.

## Claims

1. A three-way catalytic conversion system for purification treatment of an engine exhaust gas, comprising an oxidation segment containing a high-temperature-tolerant oxidation catalyst and a three-way conversion segment containing a three-way catalyst, wherein the oxidation catalyst is used to catalyze an oxidation reaction of reductive components in exhaust gas with oxygen, the oxidation segment is located downstream of an engine, and the three-way conversion segment is located downstream of the oxidation segment;
wherein the oxidation catalyst comprises a first alumina-based material and palladium loaded on the first alumina-based material and a specific surface area of the first alumina-based material after aging at 1200±100°C for 4±0.5h is not less than 60m²/g.

2. The three-way catalytic conversion system according to claim 1, wherein the oxidation catalyst satisfies at least one of the following features:
a pore volume of the first alumina-based material is 0.8cc/g-1.2cc/g;
the specific surface area of the first alumina-based material is 130-180m²/g.

3. The three-way catalytic conversion system according to claim 2, wherein the first alumina-based material comprises γ-alumina.

4. The three-way catalytic conversion system according to claim 2, wherein the first alumina-based material contains a rare earth element, and a mass content of the rare earth element in the first alumina-based material is 0-7%.

5. The three-way catalytic conversion system according to claim 2, wherein a mass content of palladium in the oxidation catalyst is 0.06-1.0%.

6. The three-way catalytic conversion system according to claim 2, wherein there are at least two oxidation segments, and a distance between each two adjacent oxidation segments is not less than 150mm.

7. The three-way catalytic conversion system according to claim 1, wherein the oxidation segment comprises a first substrate and a first active layer located on a surface of the first substrate, and the oxidation catalyst is present in the first active layer.

8. The three-way catalytic conversion system according to claim 7, wherein the first active layer further comprises a binder and/or a modifying additive and satisfies at least one of the following features:
the binder comprises an aluminum gel and/or a silica gel;
the modifying additive comprises a cerium material and/or a zirconium material;
a mass content of the oxidation catalyst in the first active layer is 85%-98%, and the remaining is the binder and/or the modifying additive.

9. The three-way catalytic conversion system according to claim 7, wherein a material for forming the first substrate comprises at least one of ceramics and metals;
wherein the oxidation catalyst comprises a first alumina-based material and palladium loaded on the first alumina-based material, and a ratio of mass of palladium in the oxidation catalyst to volume of the first substrate is (3-50) g : 1 ft³; and
wherein a ratio of mass of the first active layer to volume of the first substrate is (100-200) g : 1 L.

10. The three-way catalytic conversion system according to claim 1, wherein the three-way conversion segment further comprises a second substrate and a second active layer located on a surface of the second substrate, and the three-way catalyst is present in the second active layer;
wherein a material for forming the second substrate comprises at least one of ceramics and metals;
wherein the second active layer further comprises a binder and/or a modifying additive and satisfies at least one of the following features:
the binder comprises an aluminum gel and/or a silica gel;
the modifying additive comprises a cerium material and/or a zirconium material;
a mass content of the three-way catalyst in the second active layer is 85%-98%, and the remaining is the binder and/or the modifying additive.

11. The three-way catalytic conversion system according to claim 1, wherein the three-way catalyst comprises a porous matrix material, an oxygen storage material and a noble metal, wherein the noble metal comprises platinum, rhodium and palladium, the oxygen storage material is filled in the porous matrix material, the rhodium is loaded on the oxygen storage material, and the noble metal except for rhodium is loaded on the porous matrix material or on the oxygen storage material;
wherein the oxygen storage material comprises CeZrO.

12. The three-way catalytic conversion system according to claim 11, wherein the porous matrix material comprises a second alumina-based material and satisfies at least one of the following features:
a pore volume of the second alumina-based material is less than 0.8cc/g;
a specific surface area of the second alumina-based material is 130-240m²/g; and
the specific surface area of the second alumina-based material after aging at 1200±100°C for 4±0.5h is not less than 40m²/g;
wherein the second alumina-based material comprises γ-alumina and/or θ-alumina; and
wherein the second alumina-based material contains a rare earth element, and a mass content of the rare earth element in the second alumina-based material is 3%-7%.

13. The three-way catalytic conversion system according to claim 11, wherein the three-way conversion segment further comprises a second substrate and a second active layer located on a surface of the second substrate, and the three-way catalyst is present in the second active layer; a ratio of mass of the noble metal in the three-way catalyst to volume of the second substrate is (3-50) g : 1 ft³;
wherein the three-way catalyst further comprises platinum, a mass ratio of rhodium to platinum is 1:0-15; and/or a mass ratio of rhodium to palladium is 1 : 2-15.

14. Use of the three-way catalytic conversion system according to any one of claims 1 to 13 in purification treatment of an engine exhaust gas.

15. The use according to claim 14, wherein the engine exhaust gas comprises an engine exhaust gas with high oxygen content, and a volume content of oxygen in the engine exhaust gas with high oxygen content is not less than 1%;
wherein the engine is a stoichiometry operated engine.

## Patentansprüche

1. Katalytisches Drei-Wege-Umwandlungssystem zur Reinigungsbehandlung eines Motorabgases, das einen Oxidationsabschnitt umfasst, der einen hochtemperaturbeständigen Oxidationskatalysator sowie einen Drei-Wege-Umwandlungsabschnitt mit einem Drei-Wege-Katalysator enthält, wobei der Oxidationskatalysator zum Katalysieren einer Oxidationsreaktion von reduktiven Bestandteilen im Abgas mit Sauerstoff verwendet wird, wobei der Oxidationsabschnitt einem Motor nachgelagert angeordnet ist, und wobei der Drei-Wege-Umwandlungsabschnitt dem Oxidationsabschnitt nachgelagert angeordnet ist;
wobei der Oxidationskatalysator ein erstes Material auf der Basis von Aluminiumoxid sowie Palladium umfasst, das auf das erste Material auf der Basis von Aluminiumoxid geladen wird, und wobei ein spezifischer Oberflächenbereich des ersten Materials auf der Basis von Aluminiumoxid nach einer Alterung bei 1200±100°C für 4±0,5h nicht weniger als 60m²/g beträgt.

2. Katalytisches Drei-Wege-Umwandlungssystem nach Anspruch 1, wobei der Oxidationskatalysator mindestens eines der folgenden Merkmale erfüllt:
ein Porenvolumen des ersten Materials auf der Basis von Aluminiumoxid beträgt 0,8cc/g-1,2cc/g;
der spezifische Oberflächenbereich des ersten Materials auf der Basis von Aluminiumoxid beträgt 130-180m²/g.

3. Katalytisches Drei-Wege-Umwandlungssystem nach Anspruch 2, wobei das erste Material auf der Basis von Aluminiumoxid Y-Aluminiumoxid umfasst.

4. Katalytisches Drei-Wege-Umwandlungssystem nach Anspruch 2, wobei das erste Material auf der Basis von Aluminiumoxid ein Seltene-Erden-Element enthält, und wobei ein Massengehalt des Seltene-Erden-Elements in dem ersten Material auf der Basis von Aluminiumoxid 0-7% beträgt.

5. Katalytisches Drei-Wege-Umwandlungssystem nach Anspruch 2, wobei ein Massengehalt von Palladium in dem Oxidationskatalysator 0,06-1,0% beträgt.

6. Katalytisches Drei-Wege-Umwandlungssystem nach Anspruch 2, wobei es mindestens zwei Oxidationsabschnitte gibt, und ein Abstand zwischen jeweils zwei benachbarten Oxidationsabschnitten nicht weniger als 150 mm beträgt.

7. Katalytisches Drei-Wege-Umwandlungssystem nach Anspruch 1, wobei der Oxidationsabschnitt ein erstes Substrat und eine erste aktive Schicht umfasst, die auf einer Oberfläche des ersten Substrats angeordnet ist, und wobei der Oxidationskatalysator in der ersten aktiven Schicht vorliegt.

8. Katalytisches Drei-Wege-Umwandlungssystem nach Anspruch 7, wobei die erste aktive Schicht weiter ein Bindemittel und/oder einen modifizierenden Zusatz umfasst und mindestens eines der folgenden Merkmale erfüllt:
das Bindemittel umfasst ein Aluminiumgel und/oder ein Silikagel;
der modifizierende Zusatz umfasst ein Cerium-Material und/oder ein Zirkonium-Material;
ein Massengehalt des Oxidationskatalysators in der ersten aktiven Schicht beträgt 85%-98%, und der Rest ist das Bindemittel und/oder der modifizierende Zusatz.

9. Katalytisches Drei-Wege-Umwandlungssystem nach Anspruch 7, wobei ein Material zur Bildung des ersten Substrats zumindest entweder Keramik oder Metalle umfasst;
wobei der Oxidationskatalysator ein erstes Material auf der Basis von Aluminiumoxid und Palladium umfasst, das auf das erste Material auf der Basis von Aluminiumoxid geladen wird, und ein Masseverhältnis von Palladium in dem Oxidationskatalysator zu einem Volumen des ersten Substrats (3-50) g : 1 ft³ beträgt; und
wobei ein Masseverhältnis der ersten aktiven Schicht zu einem Volumen des ersten Substrats (100-200) g : 1 L beträgt.

10. Katalytisches Drei-Wege-Umwandlungssystem nach Anspruch 1, wobei der Drei-Wege-Umwandlungsabschnitt weiter ein zweites Substrat und eine zweite aktive Schicht umfasst, die auf einer Oberfläche des zweiten Substrats angeordnet ist, und wobei der Drei-Wege-Katalysator in der zweiten aktiven Schicht vorliegt;
wobei ein Material zur Bildung des zweiten Substrats zumindest entweder Keramik oder Metalle umfasst;
wobei die zweite aktive Schicht weiter ein Bindemittel und/oder einen modifizierenden Zusatz umfasst und zumindest eines der folgenden Merkmale erfüllt:
das Bindemittel umfasst ein Aluminiumgel und/oder ein Silikagel;
der modifizierende Zusatz umfasst ein Cerium-Material und/oder ein Zirkonium-Material;
ein Massengehalt des Drei-Wege-Katalysators in der zweiten aktiven Schicht beträgt 85%-98%, und der Rest ist das Bindemittel und/oder der modifizierende Zusatz.

11. Katalytisches Drei-Wege-Umwandlungssystem nach Anspruch 1, wobei der Drei-Wege-Katalysator ein poröses Matrix-Material, ein Sauerstoff-Speichermaterial sowie ein Edelmetall umfasst, wobei das Edelmetall Platin, Rhodium und Palladium umfasst, wobei das Sauerstoff-Speichermaterial in das poröse Matrix-Material gefüllt wird, wobei das Rhodium auf das Sauerstoff-Speichermaterial geladen wird, und wobei das Edelmetall abgesehen von Rhodium auf das poröse Matrix-Material oder auf das Sauerstoff-Speichermaterial geladen wird;
wobei das Sauerstoff-Speichermaterial CeZrO umfasst.

12. Katalytisches Drei-Wege-Umwandlungssystem nach Anspruch 11, wobei das poröse Matrix-Material ein zweites Material auf der Basis von Aluminiumoxid umfasst und zumindest eines der folgenden Merkmale erfüllt:
ein Porenvolumen des zweiten Materials auf der Basis von Aluminiumoxid beträgt weniger als 0,8cc/g;
ein spezifischer Oberflächenbereich des zweiten Materials auf der Basis von Aluminiumoxid beträgt 130-240m²/g; und
der spezifische Oberflächenbereich des zweiten Materials auf der Basis von Aluminiumoxid nach Alterung bei 1200±100°C für 4±0,5h beträgt nicht weniger als 40m²/g;
wobei das zweite Material auf der Basis von Aluminiumoxid Y-Aluminiumoxid und/oder θ-Aluminiumoxid umfasst; und
wobei das zweite Material auf der Basis von Aluminiumoxid ein Seltene-Erden-Element enthält, und ein Massengehalt des Seltene-Erden-Elements in dem zweiten Material auf der Basis von Aluminiumoxid 3%-7% beträgt.

13. Katalytisches Drei-Wege-Umwandlungssystem nach Anspruch 11, wobei der Drei-Wege-Umwandlungsabschnitt weiter ein zweites Substrat und eine zweite aktive Schicht umfasst, die auf einer Oberfläche des zweiten Substrats angeordnet ist, und wobei der Drei-Wege-Katalysator in der zweiten aktiven Schicht vorliegt; wobei ein Masseverhältnis des Edel-metalls in dem Drei-Wege-Katalysator zum Volumen des zweiten Substrats (3-50) g : 1 ft³ beträgt;
wobei der Drei-Wege-Katalysator weiter Platin umfasst, ein Masseverhältnis von Rhodium zu Platin 1:0-15 beträgt; und/oder ein Masseverhältnis von Rhodium zu Palladium 1 : 2-15 beträgt.

14. Verwendung des katalytischen Drei-Wege-Umwandlungssystems nach einem der Ansprüche 1 bis 13 bei einer Reinigungsbehandlung eines Motorabgases.

15. Verwendung nach Anspruch 14, wobei das Motorabgas ein Motorabgas mit einem hohen Sauerstoffgehalt umfasst, und ein Volumengehalt des Sauerstoffs in dem Abgas mit hohem Sauerstoffgehalt nicht weniger als 1% beträgt;
wobei der Motor ein stöchiometrisch betriebener Motor ist.

## Revendications

1. Système de conversion catalytique à trois voies pour un traitement d'épuration d'un gaz d'échappement de moteur, comprenant un segment d'oxydation contenant un catalyseur d'oxydation résistant aux hautes températures et un segment de conversion à trois voies contenant un catalyseur à trois voies, dans lequel le catalyseur d'oxydation est utilisé pour catalyser une réaction d'oxydation de composants réducteurs dans un gaz d'échappement avec de l'oxygène, le segment d'oxydation est situé en aval d'un moteur, et le segment de conversion à trois voies est situé en aval du segment d'oxydation ;
dans lequel le catalyseur d'oxydation comprend un premier matériau à base d'alumine et du palladium chargé sur le premier matériau à base d'alumine et une surface spécifique du premier matériau à base d'alumine après vieillissement à 1 200±100 °C pendant 4±0,5 h n'est pas inférieure à 60 m²/g.

2. Système de conversion catalytique à trois voies selon la revendication 1, dans lequel le catalyseur d'oxydation satisfait au moins l'une des caractéristiques suivantes :
un volume de pores du premier matériau à base d'alumine est de 0,8 cc/g à 1,2 cc/g ;
la surface spécifique du premier matériau à base d'alumine est de 130 à 180 m²/g.

3. Système de conversion catalytique à trois voies selon la revendication 2, dans lequel le premier matériau à base d'alumine comprend de l'alumine γ.

4. Système de conversion catalytique à trois voies selon la revendication 2, dans lequel le premier matériau à base d'alumine contient un élément de terre rare, et une teneur en masse de l'élément de terre rare dans le premier matériau à base d'alumine est de 0 % à 7 %.

5. Système de conversion catalytique à trois voies selon la revendication 2, dans lequel une teneur en masse du palladium dans le catalyseur d'oxydation est de 0,06 % à 1,0 %.

6. Système de conversion catalytique à trois voies selon la revendication 2, dans lequel il y a au moins deux segments d'oxydation, et une distance entre deux segments d'oxydation adjacents n'est pas inférieure à 150 mm.

7. Système de conversion catalytique à trois voies selon la revendication 1, dans lequel le segment d'oxydation comprend un premier substrat et une première couche active située sur une surface du premier substrat, et le catalyseur d'oxydation est présent dans la première couche active.

8. Système de conversion catalytique à trois voies selon la revendication 7, dans lequel la première couche active comprend en outre un liant et/ou un additif de modification et satisfait au moins l'une des caractéristiques suivantes :
le liant comprend un gel d'aluminium et/ou un gel de silice ;
l'additif de modification comprend un matériau de cérium et/ou un matériau de zirconium ;
une teneur en masse du catalyseur d'oxydation dans la première couche active est de 85 % à 98 %, et le solde est le liant et/ou l'additif de modification.

9. Système de conversion catalytique à trois voies selon la revendication 7, dans lequel un matériau pour former le premier substrat comprend au moins l'un parmi des céramiques et des métaux ;
dans lequel le catalyseur d'oxydation comprend un premier matériau à base d'alumine et du palladium chargé sur le premier matériau à base d'alumine, et un rapport d'une masse du palladium dans le catalyseur d'oxydation sur un volume du premier substrat est (3 à 50) g : 1 ft³ ; et
dans lequel un rapport d'une masse de la première couche active sur un volume du premier substrat est (100 à 200) g : 1 1.

10. Système de conversion catalytique à trois voies selon la revendication 1, dans lequel le segment de conversion à trois voies comprend en outre un second substrat et une seconde couche active située sur une surface du second substrat, et le catalyseur à trois voies est présent dans la seconde couche active ;
dans lequel un matériau pour former le second substrat comprend au moins l'un parmi des céramiques et des métaux ;
dans lequel la seconde couche active comprend en outre un liant et/ou un additif de modification et satisfait au moins l'une des caractéristiques suivantes :
le liant comprend un gel d'aluminium et/ou un gel de silice ;
l'additif de modification comprend un matériau de cérium et/ou un matériau de zirconium ;
une teneur en masse du catalyseur à trois voies dans la seconde couche active est de 85 % à 98 %, et le solde est le liant et/ou l'additif de modification.

11. Système de conversion catalytique à trois voies selon la revendication 1, dans lequel le catalyseur à trois voies comprend un matériau de matrice poreuse, un matériau de stockage d'oxygène et un métal noble, dans lequel le métal noble comprend du platine, du rhodium et du palladium, le matériau de stockage d'oxygène est rempli dans le matériau de matrice poreuse, le rhodium est chargé sur le matériau de stockage d'oxygène, et le métal noble à l'exception du rhodium est chargé sur le matériau de matrice poreuse ou sur le matériau de stockage d'oxygène ;
dans lequel le matériau de stockage d'oxygène comprend du CeZrO.

12. Système de conversion catalytique à trois voies selon la revendication 11, dans lequel le matériau de matrice poreuse comprend un second matériau à base d'alumine et satisfait au moins l'une des caractéristiques suivantes :
un volume de pores du second matériau à base d'alumine est inférieur à 0,8 cc/g ;
une surface spécifique du second matériau à base d'alumine est de 130 à 240 m²/g ; et
la surface spécifique du second matériau à base d'alumine après vieillissement à 1 200±100 °C pendant 4±0,5 h n'est pas inférieure à 40 m²/g ;
dans lequel le second matériau à base d'alumine comprend de l'alumine γ et/ou de l'alumine θ ; et
dans lequel le second matériau à base d'alumine contient un élément de terre rare, et une teneur en masse de l'élément de terre rare dans le second matériau à base d'alumine est de 3 % à 7 %.

13. Système de conversion catalytique à trois voies selon la revendication 11, dans lequel le second segment de conversion à trois voies comprend en outre un second substrat et une seconde couche active située sur une surface du second substrat, et le catalyseur à trois voies est présent dans la seconde couche active ; un rapport d'une masse du métal noble dans le catalyseur à trois voies sur un volume du second substrat est (3 à 50) g : 1 ft³ ;
dans lequel le catalyseur à trois voies comprend en outre du platine, un rapport en masse du rhodium sur le platine est 1:0 à 15 ; et/ou un rapport en masse du rhodium sur le palladium est 1:2 à 15.

14. Utilisation du système de conversion catalytique à trois voies selon l'une quelconque des revendications 1 à 13 dans un traitement d'épuration d'un gaz d'échappement de moteur.

15. Utilisation selon la revendication 14, dans laquelle le gaz d'échappement de moteur comprend un gaz d'échappement de moteur avec une forte teneur en oxygène, et une teneur en volume de l'oxygène dans le gaz d'échappement de moteur avec une forte teneur en oxygène n'est pas inférieure à 1 % ;
dans laquelle le moteur est un moteur à fonctionnement stœchiométrique.
